# EUROPÄISCHE PATENTANMELDUNG

(11) **EP 0 870 696 A1**
(43) Veröffentlichungstag der Anmeldung: **14.10.1998**
(21) Anmeldenummer: 98105322.6
(22) Anmeldetag: 24.03.1998
(51) Int. Cl.: B65D 73/02, F16B 27/00

(54) **Verpackung für Schrauben**

(30) Priorität: 25.03.1997 DE 19712520; 21.04.1997 DE 19716669
(71) Anmelder: Hiemer, Günter, 83646 Bad Tölz (DE)
(72) Erfinder: Hiemer, Günter, 83646 Bad Tölz (DE); Aumann, Klaus, 83661 Lenggries (DE)
(74) Vertreter: Bohnenberger, Johannes, Dr.

(57) **Zusammenfassung**

Zur Erleichterung der Handhabung von Schrauben wird eine Verpackung für in einen Untergrund eintreibbare Schrauben (10) mit selbstschneidender Spitze vorgeschlagen, die eine bandförmige Halteeinrichtung (20) zum lösbaren Halten einer Reihe von parallel ausgerichteten Schrauben in definierten Abständen voneinander umfaßt, wobei die Schrauben derart in ihren Längsachsen versetzt zueinander angeordnet sind, daß eine ihre Spitzen verbindende Linie (y) die Längsachsen (x) in einem spitzen Winkel (α) schneidet und nur eine am Ende der Halteeinrichtung gehaltene Schraube senkrecht auf den Untergrund aufsetzbar ist.

## Beschreibung

Die Erfindung betrifft eine Verpackung für Schrauben, insbesondere für in einen Untergrund eintreibbare Schrauben mit selbstschneidenden Spitzen.

Derartige, sogenannte Spanplattenschrauben, werden in großen Stückzahlen insbesondere von Zimmerleuten verwendet, wobei der Zimmerer oftmals auch in unbequemen Positionen auf der Leiter stehend eine Schraube nach der anderen eindrehen muß. Hierzu bedient er sich eines Schraubendrehers, der oftmals mit einem Magnethalter ausgestattet und mit dem entsprechenden Bit für Kreuzschlitzschrauhen oder solchen mit Innenvielzahn versehen ist, so daß die Schraube mit der einen Hand auf den Schrauber aufgesetzt und dann eingedreht wird. Die "Zielgenauigkeit" ist hier begrenzt. Weiterhin ist die Arbeit recht umständlich, da der Zimmerer immer nach dem Eindrehen einer Schraube wieder in die Vorratsschachtel greifen und - möglichst ohne sich dabei in die Finger zu stechen - eine Schraube herausholen und ansetzen muß.

Der Erfindung liegt die Aufgabe zugrunde, eine Verpackung für Schrauben aufzuzeigen, mit deren Hilfe ein einfacheres, schnelleres und sichereres Verarbeiten von größeren Anzahlen von Schrauben möglich ist.

Diese Aufgabe wird durch die Verpackung nach Anspruch 1 gelöst.

Ein wesentlicher Punkt der Erfindung liegt darin, daß die Verpackung selbst bereits dazu dient, eine Vielzahl von Schrauben zu handhaben, insbesondere an der Stelle aufzusetzen, wo sie eingedreht werden sollen, und zwar eine nach der anderen. Dies wird insbesondere dadurch ermöglicht, daß die Schrauben einerseits parallel zueinander andererseits aber gestaffelt auf der bandförmigen Halteeinrichtung angeordnet sind, so daß ihre Spitzen in einer Linie liegen, welche schräg, insbesondere in einem spitzen Winkel, die Längsachsen der Schrauben schneidet. Dadurch kann man immer nur die am Ende der Halteeinrichtung liegende Schraube mit ihrer Spitze auf einen (ebenen) Untergrund aufsetzen, die nachfolgenden Schrauben stören also nicht.

Vorzugsweise sind die Halteeinrichtungen hierbei derart stabil ausgebildet, daß man die gesamte Verpackung, also eine Vielzahl von Schrauben auf ihrer Halteeinrichtung im wesentlichen verformungsfrei handhaben kann. Man kann dann die Schrauben wie einen Stab in die Hand nehmen und eine nach der anderen eindrehen.

Die Schrauben sind hierbei an der Halteeinrichtung derart befestigt, daß eine Drehung der Schrauben um ihre Längsachse die Befestigung bei relativ geringem Energieaufwand löst, während jede andere Bewegungsrichtung die Verbindung nicht so leicht öffnet. Dies erhöht die Sicherheit der Verpackung gegen Ablösen einzelner Schrauben, ohne dabei das Eindrehen der Schrauben zu erschweren.

Vorzugsweise sind die Schrauben derart an der Halteeinrichtung befestigt, daß das Abtrennen von der Haltevorrichtung abfallfrei erfolgt. Die Halteeinrichtung selbst bleibt also insoweit erhalten, daß sie dann nach Abdrehen der letzten Schraube insgesamt weggeworfen werden kann. Vorzugsweise ist hierbei die Halteeinrichtung derart plastisch verformbar oder in größeren Abschnitten abtrennbar, daß sie nach Abdrehen der ersten paar Schrauben beim Abdrehen der nächsten Schraube nicht im Weg ist sondern fortgebogen oder abgenommen werden kann.

Bei einer Ausführungsform der Erfindung umfaßt die Halteeinrichtung mindestens einen Papp- oder Kunststoffstreifen, an welchem die Schrauben befestigt sind. Dies kann beispielsweise auch durch Aufnähen der Schrauben vorzugsweise mittels Draht erfolgen, wobei der Draht gleichzeitig eine plastische Versteifungseinrichtung darstellt, die einerseits den Papp- oder Kunststoffstreifen gestreckt hält, andererseits ein Fortbiegen von Streifenabschnitten, auf denen sich keine Schrauben mehr befinden, ermöglicht.

Bei einer anderen Ausführungsform der Erfindung umfassen die Halteeinrichtungen einen Holz- oder Preßspanstreifen, auf oder in welchem die Schrauben - ebenso natürlich wie auf dem Papp- oder Kunststoffstreifen - angeklebt bzw. eingeklebt sein können.

Bei einer weiteren Ausführungsform der Erfindung wird die bandförmige Halteeinrichtung ganz aus Draht, z. B. durch zwei in Abstand voneinander angeordnete Metalldrähte oder -bänder gebildet, die dann beispielsweise durch (Punkt-)Schweißen mit den Schrauben verbunden sein können. Hierbei ist darauf zu achten, daß der Schweißpunkt die meist vorhandene Verzinkung der Schrauben nicht zerstört. Bei einer anderen Ausführungsform der Erfindung werden darum die Drähte angelötet, wobei das Lot der Oberflächenverzinkung in seinem Korrosionsverhalten im wesentlichen entspricht. Die Schweiß- oder Lötstellen können entweder so oberflächlich sein, daß - wie oben beschrieben - eine Abtrennung der Schraube vom Draht bei Drehung der Schraube erfolgt. Es ist aber auch möglich, an den Drähten derart Sollbruchstellen vorzusehen, daß beim Eindrehen der Schraube der Draht auf der Seite abreißt, auf welcher sich die restlichen Schrauben befinden, wobei dann das die gerade zuvor abgedrehte Schraube haltende Drahtstück mit in den Untergrund eingedreht wird. Besonders dann, wenn die Schrauben einen Schaft aufweisen und die Drähte dort angebracht sind, bewirkt dies eher einen verbesserten als einen verschlechterten Sitz der Schraube.

Vorzugsweise umfassen die Halteeinrichtungen plastisch verformbare Versteifungs- und Stabilisierungseinrichtungen, wie Metall- oder Kunststoffdrähte oder -streifen.

Bevorzugte Ausführungsformen der Erfindung ergeben sich aus den Unteransprüchen.

Nachfolgend werden Ausführungsbeispiele der Erfindung anhand von Abbildungen näher erläutert. Hierbei zeigen:
- Fig. 1: eine erste Ausführungsform der Erfindung,
- Fig. 2: eine zweite Ausführungsform der Erfindung im Gebrauch,
- Fig. 3: eine dritte Ausführungsform der Erfindung im Gebrauch,
- Fig. 4: eine Detailansicht der in Fig. 1 gezeigten Ausführungsform der Erfindung,
- Fig. 5 und 6: einen Schnitt entlang der Linie V-V aus Fig. 4 für zwei verschiedene Ausführungsformen,
- Fig. 7: eine weitere Ausführungsform der Erfindung in einer Darstellung ähnlich der nach Fig. 5 oder 6;
- Fig. 8: einen Schnitt entlang der Linie VIII-VIII aus Fig. 7,
- Fig. 9: eine weitere Ausführungsform der Erfindung in einer Ansicht ähnlich der nach Fig. 4,
- Fig. 10: einen Schnitt entlang der Linie X-X aus Fig. 9,
- Fig. 11: eine weitere Ausführungsform der Erfindung in einer Darstellung ähnlich der nach Fig. 4 oder 9 und
- Fig. 12: einen Schnitt entlang der Linie XII-XII aus Fig. 11.

Bei der nachfolgenden Beschreibung werden für gleiche oder gleichwirkende Teile dieselben Bezugsziffern verwendet.

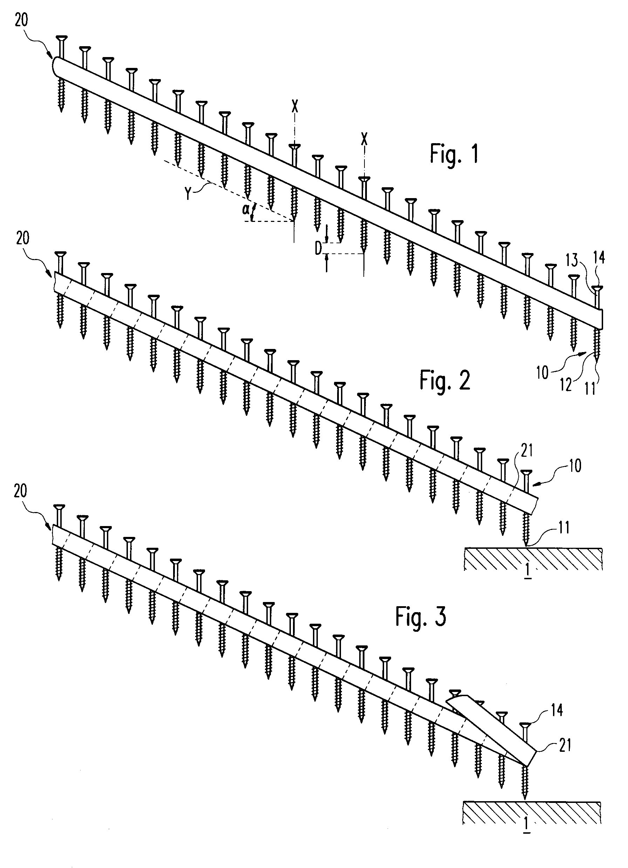

In Fig. 1 ist eine erste Ausführungsform der Erfindung dargestellt, bei welcher in einer bandförmigen Halteeinrichtung 20 eine Vielzahl von Schrauben 10 gehalten ist. Jede Schraube hat eine selbstschneidende Spitze 11, einen Gewindeabschnitt 12, einen Schaft 13 und einen daran anschließenden Kopf 14, wie dies an sich bekannt ist. Der Kopf 14 ist so ausgestaltet (vorzugsweise mit Kreuzschlitz oder Innenvielzahn), daß er mit einem Elektroschrauber verbunden werden kann.

Die Schrauben 20 sind im wesentlichen gleich voneinander beabstandet und parallel zueinander angeordnet. Sie sind jedoch derart in ihren Längsachsen X gegeneinander versetzt (um die Strecke D), daß eine Linie Y, welche die Spitzen 11 der Schrauben 10 miteinander verbindet, die Längsachsen X der Schrauben 10 in einem spitzen Winkel α schneidet. Durch diese Anordnung ist es möglich, eine komplette Schraubenpackung bestehend aus Kalter 20 und Schrauben 10 so auf einen Untergrund 1 aufzusetzen, wie dies in Fig. 2 gezeigt ist. Es sitzt dann immer nur die endseitige Schraube 10 mit ihrer Spitze 11 auf dem Untergrund 1 auf, während die Spitze 11 der nächsten Schraube die Handhabung nicht behindert. Sobald dann die jeweils letzte (endseitige) Schraube 10 in den Untergrund 1 eingedreht ist, reißt man den nicht mehr benötigten Abschnitt des Trägers 20 ab, was durch Soll-Knick- bzw. Soll-Bruchstellen 21 erleichtert wird.

In Fig. 3 ist eine Variante gezeigt, bei welcher der Träger 20, der nicht mehr benötigt wird, an der Soll-Knickstelle 21 nach hinten (oder vorne) umgefaltet wird. Die Soll-Knick- oder Soll-Bruchstellen 21 müssen also in ihrem Winkel derart angeordnet sein, daß der überflüssige Trägerabschnitt parallel zum verbleibenden Träger 20 oder aber in Richtung auf die Köpfe 14 der Schrauben 10 umgefaltet wird.

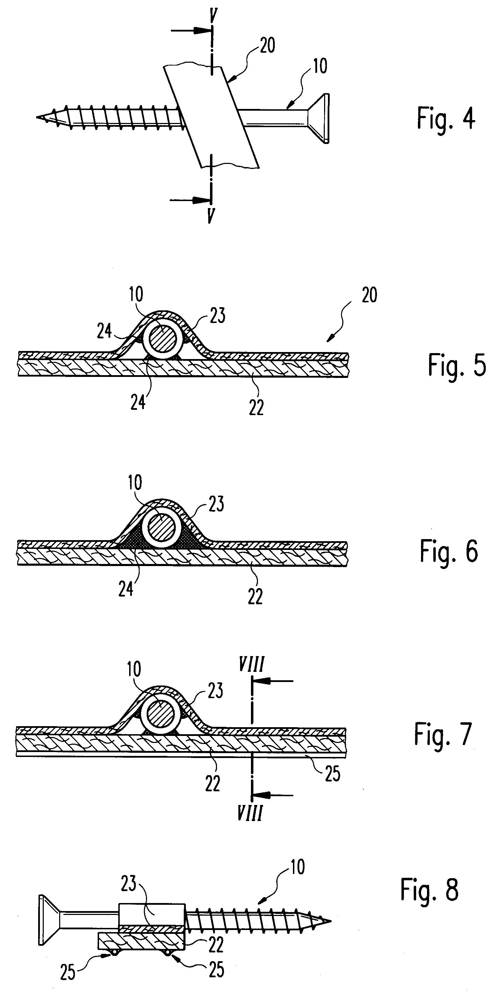

Nachfolgend werden anhand der Fig. 4 bis 12 Details der Befestigung von Schrauben 10 auf der Halteeinrichtung 20 erläutert.

Bei einer ersten Ausführungsform, die insbesondere in Fig. 5 genauer gezeigt ist, umfaßt die Halteeinrichtung 20 einen Träger 22, welcher der Gesamtanordnung ihre Stabilität verleiht und einen Halter 23, der die Schraube 10 auf dem Träger 22 hält. Bei der in Fig. 5 gezeigten Ausführungsform der Erfindung sind sowohl der Träger 22 als auch der Halter 23 aus Papier bzw. Pappe gefertigt. Die Schraube 10 ist am Träger 22 und/oder am Halter 23 mit Kleber 24 derart befestigt, daß sie sich nicht ohne weiteres von der Halteeinrichtung 20 löst, sondern nur durch die erhöhte Kraft eines Schraubers von der Halteeinrichtung 20 entfernbar ist.

Bei der in Fig. 6 gezeigten alternativen Ausführungsform ist der Raum zwischen dem Halter 23 und dem Träger 22 mit Kleber 24 im wesentlichen ausgefüllt, wobei der Kleber der Gesamtanordnung eine erhöhte Festigkeit verleiht.

Die in den Fig. 7 und 8 gezeigte Ausführungsform der Erfindung unterscheidet sich von der nach den Fig. 4 bis 6 dadurch, daß der Träger 22 zusätzlich noch mit Versteifungselementen 25 verbunden ist, die bei dieser Ausführungsform als Metalldrähte ausgebildet sind. Derartige Metalldrähte haben den Vorteil, daß sie nicht nur billig herzustellen und zu verarbeiten sind und auch die hier notwendige Plastizität zum Umknicken der Halteeinrichtung 20 aufweisen, wie dies beispielsweise in Fig. 3 gezeigt ist, sie sind auch recht leicht zu entsorgen, da sie sich aus (Papier-)Müll leicht über Magnete heraustrennen lassen.

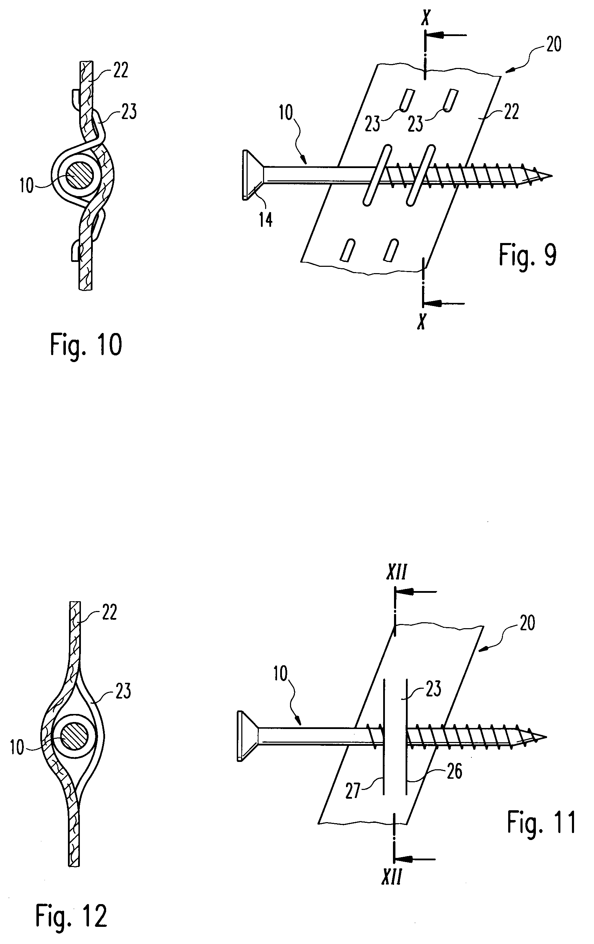

Bei der in Fig. 9 gezeigten weiteren Ausführungsform der Erfindung sind die Schrauben 10 mittels drahtförmiger Halter 23 auf den Träger 22 aufgenäht. Bei diese Ausführungsform ist der Träger 22 vorzugsweise so stabil ausgebildet, daß beim Eindrehen einer Schraube 10 diese mit ihrem konischen Kopf 14 durch die drahtförmigen Halter 23 hindurchschlüpft, ohne daß dabei der Träger 22 zerstört wird. Da der drahtförmige Träger 23 aber aus Metalldraht besteht, ist die Gesamtanordnung derart plastisch verformbar, daß man überflüssige und hinderliche Abschnitte der Halteeinrichtung 20 einfach fortknicken kann.

Die in Fig. 11 gezeigte Ausführungsform der Erfindung umfaßt lediglich einen als Band ausgeführten Träger 22, der durch entsprechende Schnitte 26, 27 einen herausgehobenen Bandabschnitt 23 aufweist, der zum Befestigen einer Schraube 10 dient. Eine derartige Ausführungsform läßt sich besonders leicht aus festerer Pappe, aus Kunststoff oder aus Metall herstellen und automatisiert bestücken.

### Bezugszeichenliste

- 1: Untergrund
- 10: Schraube
- 11: Spitze
- 12: Gewinde
- 13: Schaft
- 14: Kopf
- 20: Halteeinrichtung
- 21: Soll-Knick-/-Bruchstelle
- 22: Träger
- 23: Halter
- 24: Kleber
- 25: Versteifungselement/Draht
- 26: erster Schnitt
- 27: zweiter Schnitt
- X: Schraubenlängsachsen

## Patentansprüche

1. Verpackung für Schrauben, insbesondere in einen Untergrund (1) eintreibbare Schrauben (10) mit selbstschneidenden Spitzen (11), umfassend
eine bandförmige Halteeinrichtung (20) zum parallel ausgerichteten Halten einer Reihe von Schrauben (10) in definierten Abständen voneinander, wobei die Schrauben (10) derart in ihren Längsachsen (X) versetzt (Abstand D) zueinander angeordnet sind, daß eine ihre Spitzen (11) verbindende Linie (Y) die Schraubenlängsachsen (X) in einem spitzen Winkel (α) schneidet und nur eine am Ende der Halteeinrichtung (20) gehaltene Schraube (10) senkrecht auf den Untergrund (1) aufsetzbar ist.

2. Verpackung nach Anspruch 1,
**dadurch gekennzeichnet,** daß
die Halteeinrichtung (20) derart stabil ausgebildet ist, daß die Verpackung im wesentlichen verformungsfrei handhabbar ist.

3. Verpackung nach einem der vorhergehenden Ansprüche,
**dadurch gekennzeichnet,** daß
die Schrauben (10) derart an der Halteeinrichtung (20) befestigt sind, daß eine Drehung der Schrauben (10) um ihre Längsachse (X) die Befestigung bei geringerem Energieaufwand löst als eine andere Bewegung.

4. Verpackung nach einem der vorhergehenden Ansprüche,
**dadurch gekennzeichnet,** daß
die Schrauben (10) derart an der Halteeinrichtung (20) befestigt sind, daß das Abtrennen von der Halteeinrichtung (20) abfallfrei erfolgt.

5. Verpackung nach Anspruch 4,
**dadurch gekennzeichnet,** daß
die Halteeinrichtung (20) plastisch verformbar und/oder abschnittsweise abtrennbar ist.

6. Verpackung nach einem der vorhergehenden Ansprüche,
**dadurch gekennzeichnet,** daß
die Halteeinrichtung (20) mindestens einen Papp- oder Kunststoffstreifen umfaßt.

7. Halteeinrichtung nach Anspruch 6,
**dadurch gekennzeichnet,** daß
die Schrauben (10) an der Halteeinrichtung (20) vorzugsweise mit Metalldraht (23) angenäht sind.

8. Verpackung nach einem der Ansprüche 1 bis 5,
**dadurch gekennzeichnet,** daß
die Halteeinrichtung (20) einen Holz- oder Preßspanstreifen umfaßt.

9. Verpackung nach einem der vorhergehenden Ansprüche,
**dadurch gekennzeichnet,** daß
die Schrauben (10) an der Halteeinrichtung (20) angeklebt sind.

10. Verpackung nach einem der vorhergehenden Ansprüche,
**dadurch gekennzeichnet,** daß
die Halteeinrichtungen (20) vorzugsweise plastisch verformbare Versteifungs- oder Stabilisierungseinrichtungen (23) umfassen.
